(19) Europäisches Patentamt / European Patent Office / Office européen des brevets

(11) **EP 2 700 683 B1**

(12) **EUROPEAN PATENT SPECIFICATION**

(45) Date of publication and mention
of the grant of the patent:
**08.06.2016 Bulletin 2016/23**

(21) Application number: **12181578.1**

(22) Date of filing: **23.08.2012**

(51) Int Cl.:
*C09J 5/06* (2006.01)     *C09J 7/00* (2006.01)
*C09J 163/00* (2006.01)     *C08K 7/22* (2006.01)
*C08K 5/00* (2006.01)     *C08K 3/36* (2006.01)
*B32B 7/12* (2006.01)     *B32B 15/092* (2006.01)
*B32B 37/12* (2006.01)     *B21D 39/02* (2006.01)

(54) **Structural adhesive film**

Haftstrukturfolie

Film adhésif structurel

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**26.02.2014 Bulletin 2014/09**

(73) Proprietor: **3M Innovative Properties Company**
St. Paul, MN 55133-3427 (US)

(72) Inventors:
• **Elgimiabi, Sohaib**
41453 Neuss (DE)
• **Cura, Elisabeth**
41453 Neuss (DE)

(74) Representative: **Gabriel, Kiroubagaranne et al**
**3M Belgium B.V.B.A./S.P.R.L.**
**Hermeslaan 7**
**1831 Diegem (BE)**

(56) References cited:
WO-A1-02/079337     WO-A1-2007/025007
WO-A2-2007/014039     US-A1- 2007 116 961
US-A1- 2012 121 878

• **"PKHP-200: MIcronized PKHH Grade, 110 micron
average", , 3 January 2013 (2013-01-03), pages
1-1, XP055048617, Retrieved from the Internet:
URL:http://www.phenoxy.com/products/pkhp-2
00.html [retrieved on 2013-01-03]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Technical Field of the Invention**

This invention relates to a structural adhesive film suitable for bonding metal parts, and in particular for hem flange bonding of metal parts. More specifically, the present invention is directed to a structural adhesive film comprising a thermosettable composition which comprises an epoxy compound having a selected average epoxy equivalent weight, a thermoplastic resin having a selected softening point, and an epoxy curing agent. The present invention further relates to a thermoset structural adhesive film obtainable by thermosetting of the structural adhesive film of then invention, and to a metal part assembly comprising such a thermoset structural adhesive film. In another aspect, the present invention relats to a method for bonding metal parts, in particular for hem flange bonding of metal parts. In still a further aspect, the invention relates to the use of such structural adhesive films for bonding metal parts, in particular for hem flange bonding of metal parts.

**Background of the Invention**

Metal joints in vehicles may be formed through the use of an adhesive. For example, an adhesive may be used to bond a metal panel, for example a roof panel to the support structure or chassis of the vehicle. Further, an adhesive may be used in joining two metal panels of a vehicle closure panel. Vehicle closure panels typically comprise an assembly of an outer and an inner metal panel whereby a hem structure is formed by folding an edge of an outer panel over an edge of the inner panel. Typically, an adhesive is provided there between to bond the panels together. Further, a sealant typically needs to be applied at the joint of the metal panels to provide for sufficient corrosion resistance. For example, US 6,000,118 discloses the use of a flowable sealant bead between the facing surfaces of the two panels, and a thin film of uncured paint-like resin between a flange on the outer panel and the exposed surface of the inner panel. The paint film is cured to a solid impervious condition by a baking operation performed on the completed door panel. US 6,368,008 discloses the use of an adhesive for securing two metal panels together. The edge of the joint is further sealed by a metal coating. WO 2009/071269 discloses an expandable epoxy paste adhesive as a sealant for a hem flange. A further hemmed structure is disclosed in US 6,528,176.

Further efforts have been undertaken to develop adhesive compositions whereby two metal panels, in particular an outer and an inner panel of a vehicle closure panel, could be joined with an adhesive without the need for a further material for sealing the joint. Thus, it became desirable to develop adhesive systems that provide adequate bonding while also sealing the joint and providing corrosion resistance. A partial solution has been described in e.g. WO 2007/014039, which discloses a thermally expandable and curable epoxy-based precursor of an expanded thermoset film toughened foamed film comprising a mixture of solid and liquid epoxy resins, and claimed to provide both favorable energy absorbing properties and gap filling properties upon curing. Another partial solution has been described in WO 2011/141148, which describes a heat activated structural adhesive that is solid and dry to the touch at ambient temperature, that can be activated to develop adhesive properties at an elevated temperature and which can be moulded without curing.

Without contesting the technical advantages associated with the adhesive compositions and systems disclosed in the art, there is still a need for a high performance structural adhesive film that combines excellent physical properties such as form stability, flexibility, robustness and handling properties in uncured state; as well as excellent bonding and sealing performance after curing.

The structural adhesive film of the present invention is particularly suitable for automated handling and application, in particular by fast robotic equipments. More particularly, the structural adhesive film of the present invention enables efficient automation of the process of forming a metal joint between metal plates. Other advantages of the structural adhesive films, thermoset structural adhesive films, metal assemblies and methods of the invention will be apparent from the following description.

**Summary of the Invention**

According to one aspect, the present invention relates to a structural adhesive film as defined in claim 1. Preferred embodiments are defined in the appended dependent claims.

According to another aspect, the present invention relates to a method for bonding metal parts, the method comprising:

 a) providing a first metal part and a second metal part, wherein one of the first metal part and the second metal part comprises a metal panel;
 b) providing a structural adhesive film as described above;

c) adhering the first metal part and second metal part at a temperature below the activation temperature of the epoxy curing agent, thereby forming a metal joint; and

d) heating the metal joint at a temperature above the activation temperature of the epoxy curing agent, so as to cause thermosetting of the thermosettable composition of the structural adhesive film.

According to still another aspect of the present invention, it is provided a metal part assembly, comprising:

a) a first metal part and a second metal part, wherein at least one of the first metal part and second metal part comprises a metal panel; and

b) a thermoset structural adhesive film having a first portion near a first end of the structural adhesive film and a second portion near the second end opposite to the first end of said structural adhesive film;

whereby the thermoset structural adhesive film is provided between the first metal part and the second metal part and adheres the first metal part and the second metal part together, and wherein the thermoset structural adhesive film is obtainable by thermosetting of the thermosettable composition as defined above.

In another aspect, the present invention is directed to a thermoset structural adhesive film obtainable by thermosetting of the thermosettable composition as defined above, wherein the thermosetting of the thermosettable composition is performed at a temperature comprised between 140°C and 200°C.

According to still another aspect, the present invention is directed to the use of a structural adhesive film as described above for bonding metal parts, preferably for hem flange bonding of metal parts.

## Brief Description of the Figures

Figure 1 is a cross-sectional view of a metal part assembly in accordance with one aspect of the present invention.

Figure 2 is an embodiment showing a cross-sectional view of an inner panel with a structural adhesive film applied thereto and an outer panel before joining it with the inner panel.

## Detailed description of the invention

According to one aspect, the present invention relates to a structural adhesive film as defined in claim 1.

The term "film" used throughout the present description relates to two-dimensional articles which are usually referred to as strips, foils, bands, sheets, sheeting or the like. The softening point of the thermoplastic resin is typically defined as its Tg value (Glass Transition Temperature), as measured e.g. by Differential Scanning Calorimetry (DSC) or Thermo-Mechanical Analysis (TMA).

In the context of the present invention, it has been surprisingly discovered that uncured structural adhesive films provided with an elongation at break of at least 60%, when measured according to tensile test DIN EN ISO 527, are particularly suitable for automated handling and application (in particular by fast robotic equipments), in particular when used for bonding metal parts, more in particular for hem flange bonding of metal parts. Advantageously, the structural adhesive films according to the invention allows high-speed robotic application.

In a preferred aspect, the present invention relates to a structural adhesive film comprising a thermosettable composition, wherein the thermosettable composition comprises:

a) from 50 to 60 wt%, of an epoxy compound having an average epoxy equivalent weight of less than 250g/equivalent;

b) from 15 to 30 wt%, more preferably from 20 to 30 wt%, of a Thermoplastic resin having a softening point comprised between 60°C and 140°C;

c) from 2 to 8 wt%, more preferably from 2.5 to 4 wt%, of an epoxy curing agent;

d) optionally, a toughening agent; and

wherein the weight ratio of the epoxy compound and the thermoplastic resin is comprised between 1 and 3, preferably between 1.5 and 2.5, more preferably between 1.8 and 2.2.

## EPOXY COMPOUND

The structural adhesive film according to the present invention, comprises a thermosettable composition that comprises an epoxy compound having an average epoxy equivalent weight of less than 250g/equivalent. Suitable epoxy compounds for use herein will be easily identified by those skilled in the art, in the light of the present description.

In a preferred aspect, the epoxy compound for use herein has an average epoxy equivalent weight of less than 230g/equivalent, preferably less than 220g/equivalent, more preferably less than 200g/equivalent. Preferably, the epoxy compound for use herein has an average epoxy equivalent weight comprised between 100 and 200g/equivalent, preferably between 150 and 200g/equivalent, more preferably between 170 and 200g/equivalent. Preferably still, the epoxy compound for use herein has a weight average molecular weight of not more than 700 g/mol, preferably not more than 500 g/mol, more preferably not more than 400 g/mol. Advantageously, the epoxy compound for use herein has a weight average molecular weight comprised between 200 and 400 g/mol, preferably between 300 and 400 g/mol, more preferably between 350 and 400 g/mol. The epoxy compound for use herein is preferably selected from the group of epoxy compounds having an average epoxy functionality, i.e. an average number of polymerizable epoxy groups per molecule, of at least 2 and, more preferably, from 2 to 4.

Any organic compound having at least one oxirane ring polymerizable by a ring opening reaction may be used as an epoxy compound in the thermosettable composition of the structural adhesive film according to the invention, provided they have an average epoxy equivalent weight of less than 250g/equivalent. Such materials, broadly called epoxies, include monomeric epoxy compounds and polymeric epoxy compounds and can be aliphatic, cycloaliphatic, aromatic or heterocyclic. Useful materials generally have at least two polymerizable epoxy groups per molecule and, more preferably, from two to four polymerizable epoxy groups per molecule.

These epoxy compounds are generally liquid, or semi-liquid, at room temperature and are frequently also referred to as reactive epoxy thinners or reactive epoxy diluents. These compounds are preferably selected from the group of optionally substituted di- and polyglycidyl ethers of di- and polyphenols or aliphatic or cycloaliphatic hydroxyl compounds, Suitable epoxy compounds for use herein are commercially available from Momentive under tradename Epikote™ 828; from Dow Chemical Co. under tradename DER 331, DER 332 and DER 334; from Resolution Performance Products under tradename Epon® 828; from Polysciences, Inc. under tradename Epon® 825 / 826/ 830/ 834/ 863/ 824; from Hexion under tradename Bakelite® EPR 164; from Huntsman under tradename Araldite® GY 250/260; or from Leuna Harze under tradename EPILOX® A 1900.

Epoxy compounds which are useful in the structural adhesive film are preferably derived from bisphenol A, bisphenol E, bisphenol F, bisphenol S, aliphatic and aromatic amines, such as methylene dianiline and aminophenols, and halogen substituted bisphenol resins, novolacs, aliphatic epoxies, and combinations thereof and/or therebetween. More preferably, the organic epoxies are selected from the group comprising diglycidyl ethers of bisphenol A and bisphenol F and epoxy novolacs.

The amount of epoxy compound in the thermosettable composition of the structural adhesive film is typically comprised between 30 and 60 wt%, preferably between 40 and 60 wt%, more preferably between 50 and 60 wt%, based on total weight of the thermosettable composition.

## THERMOPLASTIC RESIN

The thermosettable composition of the structural adhesive film according to the invention further comprises a thermoplastic resin having a softening point comprised between 60°C and 140°C. Suitable thermoplastic resins for use herein will be easily identified by those skilled in the art, in the light of the present description. Thermoplastic resins may also frequently be referred to as film forming agents.

In a preferred aspect, thermoplastic resins for use herein have a softening point comprised between 70°C and 120°C, preferably between 80°C and 100°C, more preferably between 85°C and 95°C.

Suitable thermoplastic resins for use herein are preferably selected from the group consisting of polyether thermoplastic resins, polypropylene thermoplastic resins, polyvinyl chloride thermoplastic resins, polyester thermoplastic resins, polycaprolactone thermoplastic resins, polystyrene thermoplastic resins, polycarbonate thermoplastic resins, polyamide thermoplastic resins, and any combinations of mixtures thereof.

Suitable thermoplastic resins for use herein may be advantageously selected from the group of polyether thermoplastic resins, and preferably polyhydroxyether thermoplastic resins. In a preferred aspect, thermoplastic resins for use herein are selected from the group of polyhydroxyether thermoplastic resins, which are preferably selected from the group consisting of phenoxy resins, polyether diamine resins, polyvinylacetal resins, in particular polyvinyl butyral resins, and any combinations or mixtures thereof. Examples of suitable polyvinylacetal resins for use herein include Vinyl Chloride/Vinyl Acetate Copolymers, Carboxyl-Modified Vinyl Copolymers, and Hydroxyl-Modified Vinyl Copolymers, commercially available from Dow Chemicals. In a very preferred aspect of the invention, the thermoplastic resin for use herein is selected from the group of phenoxy resins. Suitable thermoplastic resins for use herein are commercially available from InChem Corporation under trade designation PKHP, PKHH, PKHA, PKHB, PKHC, PKFE, PKHJ, PKHM-30 or PKHM-301.

The amount of thermoplastic resin in the thermosettable composition of the structural adhesive film is comprised between 10 and 50 wt%, preferably between 15 and 30 wt%, more preferably between 20 and 30 wt%, based on total weight of the thermosettable composition.

## EPOXY CURING AGENT

The thermosettable composition of the structural adhesive film according to the invention, further comprises an epoxy curing agent. Any epoxy curing agent, commonly known in the art, may be used in the thermosettable composition of the structural adhesive film of the invention. Suitable epoxy curing agents for use herein are materials that react with the oxirane ring of the organic epoxide to cause substantial cross-linking of the epoxide. These materials contain at least one nucleophilic or electrophilic moiety (such as an active hydrogen atom) that causes the cross-linking reaction to occur. Epoxy curing agents are distinct from epoxide chain extension agents, which primarily become lodged between chains of the organic epoxide and cause little, if any cross-linking. Epoxy curing agents as used herein are also known in the art as epoxy hardeners, epoxide hardeners, catalysts, epoxy curatives, and curatives.

Sometimes, differentiation is made between epoxy curing agents and accelerators which are used to increase the rate of the epoxide curing reaction. Accelerators typically are multifunctional materials which can also be classified as epoxy curing agents. Therefore, in the present specification, no differentiation is made between curing agents and accelerators.

Epoxy curing agents for use herein include those which are conventionally used for curing epoxy resin compositions and forming crosslinked polymer networks. Suitable epoxy curing agents may also be referred to as latent curing agents, which are typically chosen so that they do not react with the epoxy resin until the appropriate processing conditions are applied. Such compounds also include aliphatic and aromatic tertiary amines such as dimethylaminopropylamine and pyridine, which may act as catalysts to generate substantial crosslinking. Further, boron complexes, in particular boron complexes with monoethanolamine, imidazoles such as 2-ethyl-methylimidazole, guanidines such as tetramethyl guanidine, dicyanodiamide (often referred to as DICY), substituted ureas such as toluene diisocyanate urea, and acid anhydrides such as the 4-methyltetrahydroxyphthalic acid anhydride, 3-methyltetrahydroxyphthalic acid anhydride and methylnorbornenephthalic acid anhydride, may be employed. Still other useful epoxy curing agents include polyamines, mercaptans and phenols. Other epoxy curing agents for use herein include encapsulated amines, Lewis acids salts, transition metal complexes and molecular sieves. Preferably, the epoxy curing agent is selected from the group consisting of amines, acid anhydrides, guanidines, dicyandiamide and mixtures thereof. More preferably, the epoxy curing agent contains dicyandiamide. Suitable epoxy curing agents for use herein are commercially available from Air Products under tradename Amicure® CG-1200.

The amount of epoxy curing agents in the thermosettable composition of the structural adhesive film is comprised between 2 and 15 wt%, preferably between 2 and 8 wt%, more preferably between 2.5 and 4 wt%, based on total weight of the thermosettable composition.

## TOUGHENING AGENT

In a particular aspect, the thermosettable composition of the structural adhesive film may further comprise one or more toughening agents. Any toughening agent, commonly known in the art, may be used in the thermosettable composition of the structural adhesive film of the invention. The toughening agents are preferably selected from a group comprising core-shell toughening agents, CTBNs (carboxyl and/or nitrile terminated butadiene/nitrile rubbers) and high molecular weight amine terminated polytetramethylene oxide.

Core-shell toughening agents which are especially preferred, usually comprise different materials in the inner core region and the outer shell region, respectively. Preferably, the core may be harder than the shell but this is not required. The shell may comprise harder material and/or the shell may be layered in its construction. Most preferably, the inner hard core component is comprised of a single and/or a plurality of organic polymers and inorganic oxides from the first, second and/or third transition series of the periodic table such as silica, alumina, zirconia, and/or naturally occurring minerals such as feldspars, silicates, aluminates, zirconates, and/or other hardened materials such as carbides, nitrides, silicides, aluminides, and/or some combination thereof and therebetween. The outer soft shell component may be comprised of rubbers such as diene, olefin rubbers, natural rubber, polyisoprene, copolymers thereof, ethylene propylene monomer rubber, diene-acrylonitrile copolymers, copolymers of vinyl aromatic monomers, styrene-butadiene copolymers known as SBR rubbers, and terpolymers of dienes with acrylonitrile or unsaturated esters and styrene or vinyl toluene. The soft shell preferably includes modifications with functionalities such as carboxyl, hydroxyl, epoxy, cyanates, isocyanates, amino, and thiol which can react with the epoxy components of the precursor. Core-shell toughening agents which are useful in the thermosettable composition are commercially available, for example, from Rohm and Hass under the trade designation Paraloid™.

CTBN toughening agents react through their carboxyl and/or nitrile functional groups with the epoxide component of the precursor during curing thereby introducing their butadiene/nitrile rubber portion as a soft, shock-absorbing segment into the epoxy network forming a hard segment. CTBN toughening agents which are useful in the present invention are commercially available, for example, from Hanse Chemie AG, Hamburg, Germany, under the trade designation Albipox™.

A high molecular weight amine terminated polytetramethylene oxide useful in the thermosettable composition is commercially available, for example, from 3M Company, St. Paul/MN, USA, under the trade designation "3M EPX™ Rubber".

The amount of the one or more toughening agents present in the thermosettable composition is typically comprised between from 10 to 40 wt%, preferably between 10 and 30 wt%, more preferably between 10 and 20 wt%, based on total weight of the thermosettable composition.

In a particular aspect of the structural adhesive film according to the present invention, the weight ratio of the toughening agent and the thermoplastic resin is advantageously comprised between 1 and 4, preferably between 1 and 3, more preferably between 1.5 and 2.5, even more preferably between 1.8 and 2.2.

## BLOWING AGENT

In a particular aspect, the thermosettable composition of the structural adhesive film may further comprise one or more blowing agents. Any blowing agent, commonly known in the art, may be used in the thermosettable composition of the structural adhesive film of the invention.

By including a blowing agent in the thermosettable composition of the structural adhesive film, the structural adhesive film becomes heat expandable and may be referred to as an expandable structural adhesive film. Accordingly, by heating, for example during the heating to cause thermosetting of the adhesive sheet, the structural adhesive film expands which helps sealing of any gap in the metal joint. As a result, corrosion resistance may be improved. The one or more blowing agents are preferably selected from the group of non-encapsulated and encapsulated blowing agents.

Non-encapsulated blowing agents, which are sometimes also referred to as chemical blowing agents, release a gaseous compound such as nitrogen, nitrogen oxide, hydrogen or carboxide dioxide during heating. Chemical blowing agents which are useful in the present invention include, for example, azobisisobutyronitriles, azodicarbonamides, carbazides, hydrazides, non-azo chemical blowing agents based on sodium borohydride or sodium bicarbonate/citric acid and dinitrosopentamethylenetetramine. The amount of the one or more chemical blowing agents is typically comprises between 0.2 and 2 wt%, preferably between 0.5 and 1.5 wt%, based on the total weight of the thermosettable composition.

Encapsulated blowing agents usually comprise liquified gases such as, for example, trichlorofluoromethane or hydrocarbons such as n-pentane, iso-pentane, neopentane, butane and/or iso-butane encapsulated in a polymeric thermoplastic shell. Upon heating the liquified gas expands and enlarges or blows up the thermoplastic shell like a "micro-balloon". Typically, the amount one or more encapsulated blowing agents may be advantageously comprised between from 0.5 to 10 wt%, preferably from 1 to 5 wt%, more preferably from 1 to 2 wt%, based on the total weight of the thermosettable composition. Encapsulated blowing agents, which are useful in the thermosettable composition, are commercially available, for example, from Pierce & Stevens Chemical Corp under the trade designation Micropearl™, from Matsumoto under the trade name Microsphere™ or from Akzo Nobel under the trade name Expancel™.

In a particular aspect, the amount of one or more blowing agents is selected such as to provide the structural adhesive film with a free expansion rate upon curing of not more than 50%, preferably not more than 40%, more preferably not more than 30%, when subjecting the structural adhesive film to a curing temperature above the activation (onset) temperature of the curing reaction, and when measured as described in the Test Methods section. More in particular, the amount of one or more blowing agents is selected such as to provide the structural adhesive film with a free expansion rate upon curing of between 10 and 40%, preferably between 10 and 30%, more preferably between 15 and 25%.

The thermosettable composition may optionally comprise further components, additives and/or agents. Other optional ingredients that may advantageously be incorporated into thermosettable composition include wetting agents, such as those selected from the group consisting of titanates, silanes, zirconates, zircoaluminates, phosphoric ester(s) and mixtures thereof. The wetting agent improves the mixability and processability of the composition and can also enhance the composition's handling characteristics. Useful wetting agents are disclosed in U.S. 5,019,605. An especially useful wetting agent is commercially available as Coatex DO-UP6L from Coatex, Gene, France.

Other optional ingredients which may be used include additives, agents or performance modifiers such as e.g. flame retardants, impact modifiers, heat stabilizers, colorants, processing aids, lubricants, and reinforcing agents.

In a particular aspect, the thermosettable composition may comprise one or more fillers which may be used to regulate rheological properties of the precursor and adjust its viscosity to improve and adjust its processability for specific applications. Preferred fillers for use herein are selected from the group consisting of filler particles, microspheres, expendable microspheres, preferably pentane filled expendable microspheres or gaseous cavities, glassbeads, glass microspheres, hydrophobic silica type fillers, hydrophilic silica type fillers, fibers, electrically and/or thermally conducting particles, nano particles, and any combinations thereof. Preferred fillers for use herein are selected from the group of inorganic fillers, including silica. One preferred filler for use herein is hydrophobic fumed silica, which is commercially available as Aerosil™ from Degussa or CAB-O-SIL™ from Cabot. Another preferred filler for use herein is expanded perlite, which is commercially available under the trade designation Eurocell® from Europerl, Germany. Typically, the amount of filler may be advantageously of not more than 10 wt%, based on the total weight of the thermosettable composition.

In another particular aspect, the thermosettable composition may comprise one or more incompressible particulate material, such as e.g. solid glass beads commercially available from Kominex Mineralmahlwerk, GmbH. In the context of the present invention, it has been found that when incompressible particulate material is comprised in the thermosettable composition of the structural adhesive film according to the invention, undesirable squeezing-out of the structural adhesive film before curing may be advantageously avoided during compression step, when the structural adhesive film is used for bonding metal parts.

In a preferred aspect of the structural adhesive film according to the invention, the weight ratio of the epoxy compound and the thermoplastic resin, and optionally the amount of the toughening agent are selected such as to provide the structural adhesive film with an elongation at break of at least 100%, preferably at least 200%, more preferably at least 500%, even more preferably at least 700%, still more preferably at least 900%, when measured according to tensile test DIN EN ISO 527. Advantageously, the structural adhesive film is provided with an elongation at break of not more than 3000%, preferably not more than 2500%, more preferably not more than 2000%, in particular not more than 1500%, when measured according to tensile test DIN EN ISO 527.

The structural adhesive film according to the invention may be readily prepared by a number of techniques. For example, the various components may be added under ambient conditions to a suitable internal mixing vessel, such as a Mogul mixer. The mixing temperature is not critical and the mixing of the first and second epoxy components and the optional toughening agent component is typically performed at a temperature of 80-85°C. When the epoxy curing agent component and the optional blowing agent component is added the temperature may preferably be decreased to not more than 70°C. Mixing is continued until the components form a homogeneous mixture, after which time the thermosettable composition is removed from the mixer.

Due to their excellent processability the thermosettable composition can be processed as a film by conventional application equipment such as extruders or hot-melt coaters. The thermosettable composition may be processed as a self-supporting film or may alternatively be coated/laminated onto a suitable liner, such as e.g. a siliconized liner. The structural adhesive film of the invention may be applied to various substrates such as, for example, metals (for example, Al, Al alloys, titanium or stainless steel) or other substrates comprising, for example, glass, boron, carbon, Kevlar fibers, epoxy, phenols, cyanate esters and polyester matrices.

The structural adhesive film according to the invention is typically a soft conformable film, and may or may not be tacky at room temperature. Prior to curing, the structural adhesive film is preferably deformable and drapable so that it can applied to curved surfaces and assume any two-dimensional shape. The thickness of the structural adhesive film material may vary widely. Useful thicknesses have been found to be in the range of about 0.05 mm (millimeters) to 25 mm. For typical joining of metal panels, thicknesses may range from 0.1 to 5 mm, for example from 0.1 to 3 mm, or from 0.3 to 1 mm.

The structural adhesive film may be packaged in the form of rolls of film material, rolls of tapes, i.e., lengths of material in narrow widths, or stacks of sheets cut to a desired dimension or shape for the end use. If the adhesive film is tacky, a release liner may be interleaved between adjacent sheets or wraps of a roll. In the context of the present invention, it has been surprisingly found that where the structural adhesive film is packaged in the form of rolls of film material, the corresponding roll of film material is particularly resistant to oozing (i.e. the diffusing of epoxy resin out if the roll of film) upon storage. Without wishing to be bound by theory, it is believed that the long polymeric chains comprised in the thermoplastic resin participate in retaining the epoxy resin into the structural adhesive film upon storage. In particular, the structural adhesive film of the invention remains oozing-resistant when packaged in the form of rolls of film material having a length of above 100, preferably above 200, more preferably above 300, even more preferably above 500, still more preferably above 700, yet more preferably above 800 meters, and having a width typically comprised between 5 and 40 mm, in particular between 10 and 30 mm, more in particular between 10 and 20 mm.

The structural adhesive film of the invention may include one or more layers. The adhesive film may also include a netting. A suitable netting includes an open cloth or fabric of a polymeric material. Generally, the netting will be soft and may be stretchable. A particular example includes a heat set, soft and stretchy open nylon knitted cloth. The netting may have a thickness of 1 to 15 g/m$^2$, for example 5 to 12 g/m$^2$. A useful material includes 3M™ Scotch-Weld™ 3336 available from 3M Co. The structural adhesive film may also include a open non-woven layer such as a scrim.

The structural adhesive film according to the present invention is suitable to provide any benefit selected from the group consisting of form stability, flexibility, robustness, handling properties, suitability for automated handling and application, wash-out resistance with warm water, in uncured state; excellent bonding and sealing performance, high mechanical strength, water barrier properties, gap filling properties, controlled expansion behaviour, and smooth finish after curing.

According to another aspect, the present invention relates to a method for bonding metal parts, the method comprising:

a) providing a first metal part and a second metal part, wherein one of the first metal part and the second metal part comprises a metal panel;

b) providing a structural adhesive film as described above;

c) adhering said first metal part and second metal part at a temperature below the activation temperature of the epoxy curing agent, thereby forming a metal joint; and

d) heating the metal joint at a temperature above the activation temperature of the epoxy curing agent, so as to cause thermosetting of the thermosettable composition of the structural adhesive film.

According to still another aspect, the present invention relates to a method of making a metal part assembly, the method comprising:

a) providing a first metal part and a second metal part, wherein one of the first and second metal part comprises a metal panel;

b) providing a structural adhesive film according to any of the preceding claims;

c) adhering said first and second metal part thereby forming a metal joint; and

d) heating the metal joint so as to cause thermosetting of the thermosettable composition of the structural adhesive film.

In a preferred aspect of the methods according to the invention, the metal parts are automobile panels joined together at an edge, so as to form a so-called hemmed structure or a hem flange.

Accordingly, in one preferred aspect of the method according to the invention, it is provided a method for hem flange bonding of metal parts, wherein:

- the structural adhesive film has a first portion near a first end of the structural adhesive film and a second portion near the second end opposite to the first end of the structural adhesive film;
- the first metal part comprises a first metal panel having a first body portion and a first flange portion along a margin of the first body portion adjacent a first end of the first body portion;
- the second metal part comprises a second metal panel having a second body portion and a second flange portion along a margin of the second body portion adjacent a second end of the second body portion;

wherein the method comprises the steps of:

a) adhering the structural adhesive film to the first metal panel or second metal panel at a temperature below the activation temperature of the epoxy curing agent, whereby following adhering and folding, a metal joint is obtained wherein the structural adhesive film is folded such that:

i. the first portion of the structural adhesive film is provided between the second flange of the second metal panel and the first body portion of the first metal panel, and

ii. the second portion of the structural adhesive film is provided between the first flange of the first metal panel and the second body portion of the second metal panel; and

b) heating the metal joint at a temperature above the activation temperature of the epoxy curing agent, so as to cause thermosetting of the thermosettable composition of the structural adhesive film.

Preferably, the structural adhesive film is adhered to the second metal panel with the structural adhesive film being adhered to the second flange of the second metal panel and folded around the second end of the second metal panel such that the structural adhesive film is adhered to opposite sides of the second flange of the second metal panel.

According to another aspect of the present invention, it is provided a metal part assembly, comprising:

a) a first metal part and a second metal part, wherein at least one of the first metal part and second metal part comprises a metal panel; and

b) a thermoset structural adhesive film having a first portion near a first end of the structural adhesive film and a second portion near the second end opposite to the first end of the structural adhesive film;

whereby the thermoset structural adhesive film is provided between the first metal part and the second metal part and adheres the first metal part and the second metal part together, and wherein the thermoset structural adhesive film is obtainable by thermosetting of the thermosettable composition as defined above.

In one particular aspect, the metal part assembly is such that:

- the first metal part comprises a first metal panel having a first body portion and a first flange along a margin of the first body portion adjacent a first end of the first body portion;
- the second metal part comprises a second metal panel having a second body portion and a second flange along a margin of the second body portion adjacent a second end of the second body portion;
- the second flange of the second metal panel extends over the first body portion of the first metal panel with the second end of the second metal panel adjacent to the first flange of the first metal panel;
- the first flange of the first metal panel is folded over the second flange of the second metal panel;
- the first portion of the structural adhesive film is provided between (and adheres to) the second flange of the second metal panel and the first body portion of the first metal panel;
- the second portion of the structural adhesive film is provided between (and adheres to) the first flange of the first metal panel and the second body portion of the second metal panel.

In a particular embodiment, one of the metal parts is a roof panel and the other metal part is a support structure, for example the chassis of the vehicle. The metal parts and panels are typically steel parts and panels but other metal parts and panels such as aluminium parts and panels may be used as well in connection with the invention. In a particular embodiment, the metal parts are unpainted, i.e. they are body in white parts as they are known or called in the automotive industry.

Typically the joint of the metal panels for a vehicle closure panel is formed early in the manufacturing process where the panels are often contaminated for example with grease or oil. The structural adhesive film used in connection with the method typically allows bonding of the metal parts and panels to an adequate level while also providing good sealing properties on the joint thereby providing corrosion resistance.

Further, the structural adhesive film can generally be applied to metal parts and panels that may be contaminated to some extent with for example oil and generally there will be no need for cleaning of the parts or panels prior to applying the adhesive sheet. Application of the structural adhesive film through automated equipment such as robot heads is conceivable as well. Moreover, an initial adhesive bond of sufficient strength can be formed such that the metal parts can be held together without the need for clamping during further handling of the joint or manufacturing steps such as for example painting, and prior to thermosetting and forming of the final and permanent bond.

The final adhesive bond advantageously has good crash resistance and preferably has a good elongation at break such that stress that might be created at the joint can be adsorbed without causing failure of the bond. Further, the structural adhesive film according to the invention is sufficiently resistant to washing out and accordingly, the metal parts joint together by the adhesive sheet can be subjected to a washing operation, for example as may be necessary prior to painting.

The invention will be further described with reference to the following schematic figures without the intention to limit the invention thereto:

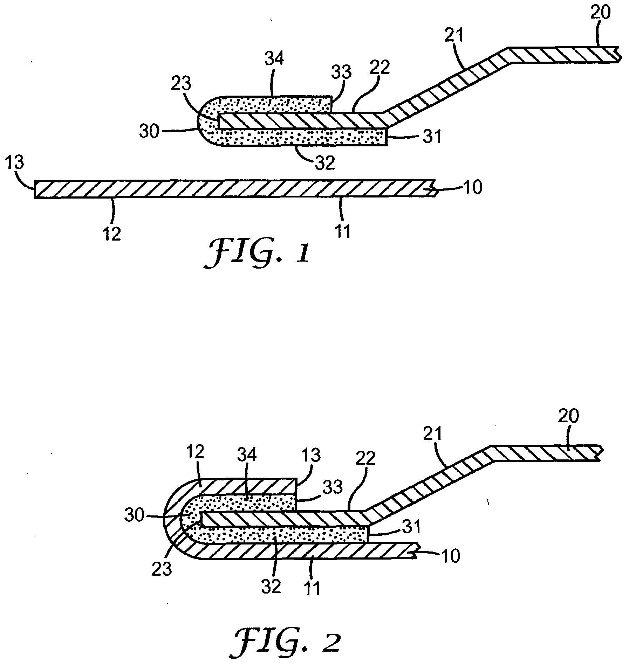

Figure 1 is a cross-sectional view of a metal part assembly in accordance with the present invention.
Figure 2 is an embodiment showing a cross-sectional view of an inner panel with an adhesive sheet applied thereto and an outer panel 10 before joining it with the inner panel.

Figure 1 shows an embodiment in connection with the present invention. As shown in Figure 1, the outer panel 10 comprises a body portion 11 with a flange 12 along a margin of the body portion near end 13 of the outer panel 10. The flange 12 is folded over flange 22 of the inner panel 20. Flange 22 of inner panel 20 is along a margin of body portion 21 of the inner panel near end 23. End 23 is adjacent flange 12 of the outer panel 10. A structural adhesive film 30 is located between the inner 20 and outer panel 10. A portion 32 near end 31 of the structural adhesive film 30 is located between body portion 11 of outer panel 10 and the flange 22 of inner panel 20. The structural adhesive film 30 is folded over inner panel 20 and hence portion 34 near end 33 of the structural adhesive film 30 is between flange 12 of the outer panel 10 and flange 22 of the inner panel 20. The structural adhesive film 30 bonds the two metal panels together at the joint or hem.

In accordance with one aspect illustrated in Figure 2, a metal part assembly in accordance with the present invention, for example as illustrated in Figure 1, may be obtained by adhering the structural adhesive film 30 to the inner metal panel 20. However, it is also possible to instead adhere the structural adhesive film 30 to the outer panel prior to joining the metal panels (not illustrated). As shown in Figure 2, the structural adhesive film 30 is adhered to the inner panel 20 at opposite sides of flange 22 of the inner panel and adhesive sheet 30 is folded around end 23 of the inner panel. In one particular aspect, the structural adhesive film 30 has a surface that is tacky at ambient temperature, typically about 20°C, and can be adhered to the inner panel via this tacky surface. Typically, the structural adhesive film allows forming an adhesive bond sufficient to hold the metal parts together in the metal joint without requiring curing of the thermosettable composition of the structural adhesive film.

The outer panel 10 may then be folded such that the flange 12 of the outer panel is folded over the flange 22

of the inner panel **20** and over portion **34** of the structural adhesive film **30**. Accordingly, outer panel **10** will be folded over inner panel **20** with the structural adhesive film located between the two panels and thus a metal joint is obtained. In case the structural adhesive film **30** was adhered to the outer panel **10** instead of inner panel **20,** the structural adhesive film **30** will be folded in-between the panels during folding of the outer panel **10** over flange **22** of the inner panel **20.**

The metal joint obtained is then heated to cause thermosetting of the thermosettable composition of the structural adhesive film, thereby forming a permanent adhesive bond between the panels and sealing the joint. This heating step can conveniently be performed whilst the panel assembly is being painted and baked as part of a usual vehicle manufacturing process. However, as desired, a separate heating or baking step of the metal joint may be provided as well. Typically, the temperature for heating the metal joint and to cause adhering and sealing, is between 60 and 200°C, for example between 100 and 150°C. Heating may be carried out in one or more steps. For example two or more heating cycles at different temperatures in the aforementioned range may be carried out. For example in a particular aspect, a first heating step may heat the metal joint to a temperature between 60 and 100°C and in a further heating step a higher temperature of between 80 and 200°C may be used. The heating time may vary but is typically between 5 minutes and 60 min, for example between 10 and 30 min.. When several heating steps are used, the time for each of the heating steps may vary and may be within the aforementioned ranges.

In accordance with still another aspect, the present invention relates to a thermoset structural adhesive film obtainable by thermosetting of the thermosettable composition as defined above, wherein the thermosetting of the thermosettable composition is performed at a temperature comprised between 140°C and 200°C.

In yet another aspect of the present invention, it is provided a structural adhesive film as described above, in the form of a tape which has been wound to form a roll. In one particular aspect, the structural adhesive film of the invention is packaged in the form of rolls of film material having a length of above 100, preferably above 200, more preferably above 300, even more preferably above 500, still more preferably above 700, yet more preferably above 800 meters, and a width typically comprised between 5 and 40 mm, in particular between 10 and 30 mm, more in particular between 10 and 20 mm.

According to still another aspect, the present invention relates to the use of a structural adhesive film as described above for the manufacturing of a metal part assembly. The present invention further relates to the use of a structural adhesive film as described above for bonding metal parts, preferably for hem flange bonding of metal parts.

Item 1 is a structural adhesive film as defined in claim 1.

Item 2 is the structural adhesive film of item 1, wherein the thermosettable composition comprises:

a) from 50 to 60 wt%, of an epoxy compound having an average epoxy equivalent weight of less than 250 g/equivalent, preferably less than 230g/equivalent, more preferably less than 220g/equivalent, even more preferably less than 200g/equivalent;
b) from 15 to 30 wt%, more preferably from 20 to 30 wt%, of a thermoplastic resin having a softening point comprised between 60°C and 140°C;
c) from 2 to 8 wt%, more preferably from 2.5 to 4 wt%, of an epoxy curing agent;
d) optionally, a toughening agent; and

wherein the weight ratio of the epoxy compound and the thermoplastic resin is comprised between 1 and 3, more preferably between 1.5 and 2.5.

Item 3 is the structural adhesive film according to any of the preceding items, wherein the epoxy compound has a weight average molecular weight of less than 700 g/mol, preferably less than 500 g/mol, more preferably less than 400 g/mol. Preferably, the epoxy compound has a weight average molecular weight comprised between 200 and 400 g/mol, more preferably between 300 and 400 g/mol, even more preferably between 350 and 400 g/mol.

Item 4 is the structural adhesive film according to any of the preceding items, wherein the epoxy compound has an average epoxy equivalent weight of less than 230g/equivalent, preferably less than 220g/equivalent, more preferably less than 200g/equivalent. More preferably, the epoxy compound has an average epoxy equivalent weight comprised between 100 and 200g/equivalent, preferably between 150 and 200g/equivalent, more preferably between 170 and 200g/equivalent.

Item 5 is the structural adhesive film according to any of the preceding items, wherein the thermoplastic resin has a softening point comprised between 70°C and 120°C, preferably between 80°C and 100°C, more preferably between 85°C and 95°C.

Item 6 is the structural adhesive film according to any of the preceding items, wherein the thermoplastic resin is selected from the group consisting of polyether thermoplastic resins, polypropylene thermoplastic resins, polyvinyl chloride thermoplastic resins, polyester thermoplastic resins, polycaprolactone thermoplastic resins, polystyrene thermoplastic resins, polycarbonate thermoplastic resins, polyamide thermoplastic resins, and any combinations of mixtures thereof.

Item 7 is the structural adhesive film according to any of the preceding items, wherein the thermoplastic resin is selected from the group of polyhydroxyether thermoplastic resins, which are preferably selected from the group consisting of phenoxy resins, polyether diamine resins, polyvinylacetal resins, in particular polyvinyl butyral resins, and any combinations or mixtures thereof.

Item 8 is the structural adhesive film according to any of the preceding items, wherein the thermoplastic resin is selected from the group of phenoxy resins.

Item 9 is the structural adhesive film according to any of the preceding items, wherein the thermosettable composition comprises a toughening agent preferably selected from the group consisting of core-shell tougheners.

Item 10 is the structural adhesive film of item 9, wherein the thermosettable composition comprises a toughening agent in an amount comprised between 10 and 40 wt%, preferably between 10 and 30 wt%, more preferably between 10 and 20 wt%.

Item 11 is the structural adhesive film according to any of the preceding items, wherein the thermosettable composition further comprises a blowing agent, preferably selected from the group consisting of non-encapsulated and encapsulated blowing agents.

Item 12 is the structural adhesive film of item 11, wherein the thermosettable composition comprises a blowing agent, in an amount comprised between 0.5 and 10 wt%, preferably between 1 and 5 wt%, more preferably between 1 and 2 wt%.

Item 13 is the structural adhesive film according to any of the preceding items, wherein the thermosettable composition further comprises a filler, preferably in an amount of less than 10 wt%, wherein the filler is preferably selected from the group of inorganic fillers comprising silica.

Item 14 is the structural adhesive film according to any of the preceding items, wherein the weight ratio of the epoxy compound and the thermoplastic resin, and optionally the amount of the toughening agent are selected such as to provide the structural adhesive film with an elongation at break of at least 100%, preferably at least 200%, more preferably at least 500%, even more preferably at least 700%, still more preferably at least 900%, when measured according to tensile test DIN EN ISO 527.

Item 15 is the structural adhesive film according to any of items 11 to 14, wherein the amount of the blowing agent is selected such as to provide the structural adhesive film with a free expansion rate upon curing of between 10 and 40%, preferably between 10 and 30%, more preferably between 15 and 25%, when subjecting the structural adhesive film to a curing temperature above the activation temperature of the curing reaction, and when the free expansion rate is measured as described in the Test Methods section.

Item 16 is a method of making a metal part assembly, the method comprising:

a) providing a first metal part and a second metal part, wherein one of the first and second metal part comprises a metal panel;
b) providing a structural adhesive film according to any of the preceding items;
c) adhering the first and second metal part thereby forming a metal joint; and
d) heating the metal joint so as to cause thermosetting of the thermosettable composition of the structural adhesive film.

Item 17 is a method for bonding metal parts, the method comprising:

a) providing a first metal part and a second metal part, wherein one of the first metal part and the second metal part comprises a metal panel;
b) providing a structural adhesive film according to any of items 1 to 15;
c) adhering the first metal part and second metal part at a temperature below the activation temperature of the epoxy curing agent, thereby forming a metal joint; and
d) heating the metal joint at a temperature above the activation temperature of the epoxy curing agent, so as to cause thermosetting of the thermosettable composition of the structural adhesive film.

Item 18 is the method of item 17 for hem flange bonding of metal parts, wherein:

- the structural adhesive film has a first portion near a first end of the structural adhesive film and a second portion near the second end opposite to the first end of the structural adhesive film;
- the first metal part comprises a first metal panel having a first body portion and a first flange portion along a margin of the first body portion adjacent a first end of the first body portion;
- the second metal part comprises a second metal panel having a second body portion and a second flange portion along a margin of the second body portion adjacent a second end of the second body portion;

wherein the method comprises the steps of:

a) adhering the structural adhesive film to the first metal panel or second metal panel at a temperature below the activation temperature of the epoxy curing agent, whereby following adhering and folding, a metal joint is obtained wherein the structural adhesive film is folded such that:

i. the first portion of the structural adhesive film is provided between the second flange of the second metal panel and the first body portion of the first metal panel, and
ii. the second portion of the structural adhesive film is provided between the first flange of the first metal panel and the second body portion of the second metal panel; and

b) heating the metal joint at a temperature above the activation temperature of the epoxy curing agent, so as to cause thermosetting of the thermosettable composition of the structural adhesive film.

Item 19 is the method of item 18, wherein the structural adhesive film is adhered to the second metal panel with the structural adhesive film being adhered to the second flange of the second metal panel and folded around the second end of the second metal panel such that the structural adhesive film is adhered to opposite sides of the second flange of the second metal panel.
Item 20 is a metal part assembly, comprising:

a) a first metal part and a second metal part, wherein at least one of the first metal part and second metal part comprises a metal panel; and
b) a thermoset structural adhesive film having a first portion near a first end of said structural adhesive film and a second portion near the second end opposite to the first end of said structural adhesive film;

whereby the thermoset structural adhesive film is provided between the first metal part and the second metal part and adheres the first metal part and the second metal part together, and wherein the thermoset structural adhesive film is obtainable by thermosetting of the thermosettable composition as defined in any of items 1 to 15.
Item 21 is the metal part assembly of item 20, wherein one of the first metal part and the second metal part comprises a roof panel and the other metal part comprises a support structure.
Item 22 is the metal part assembly according to any of item 20 or 21, wherein:

- the first metal part comprises a first metal panel having a first body portion and a first flange along a margin of the first body portion adjacent a first end of the first body portion;
- the second metal part comprises a second metal panel having a second body portion and a second flange along a margin of the second body portion adjacent a second end of the second body portion;
- the second flange of the second metal panel extends over the first body portion of the first metal panel with the second end of the second metal panel adjacent to the first flange of the first metal panel;
- the first flange of the first metal panel is folded over the second flange of the second metal panel;
- the first portion of the structural adhesive film is provided between (and adheres to) the second flange of the second metal panel and the first body portion of the first metal panel;
- the second portion of the structural adhesive film is provided between (and adheres to) the first flange of the first metal panel and the second body portion of the second metal panel.

Item 23 is a thermoset structural adhesive film obtainable by thermosetting of the thermosettable composition as defined in any of items 1 to 15, wherein the thermosetting of the thermosettable composition is performed at a temperature comprised between 140°C and 200°C.
Item 24 is a structural adhesive film according to any of items 1 to 15, in the form of a tape which has been wound to form a roll.
Item 25 is the use of a structural adhesive film according to any of items 1 to 15 for the manufacturing of a metal part assembly.
Item 26 is the use of a structural adhesive film according to any of items 1 to 15 for bonding metal parts, preferably for hem flange bonding of metal parts.
The invention is further illustrated by the following examples. These examples are merely for illustrative purposes only and are not meant to be limiting on the scope of the appended claims.

# EXAMPLES

## Test Methods

### 1. Tensile Test according to DIN EN ISO 527 (DIN 53 455).

Tensile Test for the determination of the elongation at break of the uncured structural adhesive film.

Sample preparation:

The adhesive films are conditioned 24h under normal conditions.
Strips of the adhesive film, 25 mm broad x 100 mm long, are cut. Right and left sizes are protected with masking tape so that 50mm free tape in the middle of the length is able to be measured. The masked areas permit the clamping of the sample in the tensile machine.

Sample testing:

The test is performed on a tensile test machine, Zwick testing machine Z05, 200N measuring Head, equipped with pneumatic clamping jaws. The sample is clamped in the jaws of the tensile machine, with an gap of 50mm, the upper jaw first, followed by the lower one. The strip is carefully vertically fixed. The testing speed is 300 mm/min. Audit End is set on Fmax drop 94%. The elongation at break of the sample is then measured.

### 2. Overlap Shear Strength according to DIN EN 1465.

Overlap shear strength is determined according to DIN EN 1465 using a Zwick Z050 tensile tester (commercially available by Zwick GmbH & Co. KG, Ulm, Germany) operating at a cross head speed of 13 mm/min on hot dipped galvanized steel strips (commercially available as Etalon steel, reference GC 300500AA from Societee Etalon; France) having the following dimension 100 mm X 25mm X 0.8 mm and coated with $3g/m^2$ Oil (PL 3802-39S commercially available from Fuchs Petrolub AG, Germany). For the preparation of an Overlap Shear Strength test assembly the epoxy film to be tested (having a thickness of 0.7 mm) is applied on one end of a first steel strip and covered by a second steel strip forming an overlap joint of 10 mm. The overlap joints are then clamped together using two binder clips and the test assemblies placed into an air circulating oven for 30 minutes at 180 °C. Hereby the test assemblies are heated up and cooled down using 3°C/minute ramps. Test assemblies are then conditioned for 24 hours at ambient condition 23 +/- 2°C and 50 +/- % % relative humidity before testing. As the test temperatures for measuring Overlap Shear Strength are varied from -40 °C to room temperature up to +80 °C, the tests assemblies are placed prior to testing on the Zwick tensile tester into an environmental chamber (commercially available by RS Simulatoren, Oberhausen, Germany) and the Overlap shear strength measured at -40°C, room temperature (23°C +/-2°C) and + 80°C. 3 samples are measured for each of the examples at the three different test temperatures and results averaged and reported in MPa.

### 3. Adhesive peel strength according to DIN EN 1464.

The Adhesive Peel strength is measured on hot dipped galvanized steel strips (commercially available by Etalon steel, reference GC 300500AA from Societee Etalon; France) having the following dimension 150mm X 25 mm X 0.8 mm and coated with $3g/m^2$ Oil (PL 3802-39s commercially available from Fuchs Petrolub AG, Germany) according to DIN EN 1464 using a Zwick Z050 tensile tester (commercially available by Zwick GmbH & Co. KG, Ulm, Germany). The cross head speed is set for all measurements to 100 mm/min and adhesive peel strength measured at 23°C +/- 2°C and a relative humidity of 50 +/- 5 % . For test assembly preparation a masking tape (Scotch™ 2610 Masking Tape, commercially available from 3M, USA) is applied to a first steel strip. Hereby the masking tape is applied to visualize the bond area. The bond area has a dimension of 100mm X 25mm. The example material to be tested is then applied to the marked bond area and covered by a second steel strip having the same dimension as the first one. The two strips are hereafter first manually pressed together and then clamped together using 2 binder clips along the bond line, in order to hold the test assembly in place. The test assemblies are cured for 30 minutes at 180 °C in an air circulating oven. Hereby the test assemblies are heated up and cooled down using 3°C/minute ramps. Test assemblies are then conditioned for 24 hours at ambient condition 23 +/-2°C and 50 +/-5 % relative humidity before testing. Per example material, 3 adhesive peel strength test assemblies are prepared and the test results averaged. Test results are reported in N/25mm.

**4. Wash-Out Test.**

To illustrate a vehicle door, small sized hem flanges are fabricated.

Hereby a hem flange is formed by using two steel panels (commercially available as Etalon steel, reference GC 300500AA from Societé Etalon; France) having a dimension of 200mm X 200 mm X 1 mm and in a first step applying an example film sheet having a dimension of 200mm X 20mm X 0.7 mm on the edge of the first steel panel. In a second step, the extended edge portion of the first steel panel (the length of the extended portion was between 7 - 8 mm) is folded back over the edge portion of the second steel panel positioning the example film sheet directly between the two steel panels. The resulting test assemblies are then dipped for 15 minutes into a to 55°C pre-warmed watery solution comprising 3 wt.% cleaner (commercially available as LKW Reiniger from Chemische Fabrik Dr. Stocker GmbH; Duisburg; Germany). All test assemblies are then cured for 30 minutes at 180 °C in an air circulating oven. Hereby, the test assemblies are heated up and cooled down using 3°C/minute ramps. Test assemblies are then conditioned for 24 hours at ambient condition 23 +/-2°C and 50 +/- 5 % relative humidity before testing. All test assemblies are then inspected visually. Test assemblies delivering porously cured bond lines are considered as a FAIL and test assemblies showing well sealed bond lines without noticeable bubbles are rated as a PASS.

**5. Free expansion rate of expandable structural adhesive films.**

The free expansion rate (in %) of expandable structural adhesive films is determined according to EN 2667-3. Test specimens are prepared by first cutting out square aluminium alloy sheets 2024-T3 in accordance with EN 2090 having the dimension of 120 mm x 120 mm and a sheet thickness of 1 to 2 mm. In a next step square adhesive film samples are cut out having the dimension of 100 mm x 100 mm. The adhesive squares are then adhered to the centre of the aluminium alloy sheets. Prior to curing the uncured precursor test specimens are measured with a flat edge micrometer calliper with a precision of 0.01 mm at a temperature of 4°C or lower (measurement is performed in a lower temperature that ambient in order to avoid tack of the film to adhere to the thickness measurement tooling). The precursor specimens are then cured for 30 minutes at 180°C +/- 3°C using a heating air-circulating oven available from MPC and run at a heat-up ramp of 3°C/min. Prior to the cured thickness measurement all test specimen are stored at room temperature of 23 +/-2°C and a relative humidity of 50 +/- 5 % until the cured specimens have returned to ambient temperature. The expansion rate is then calculated according to the following formula:

$$\text{Expansion rate (\%)} = ((\text{Thickness}_{\text{cured}} - \text{Thickness}_{\text{uncured}}) / \text{Thickness}_{\text{uncured}}) \times 100$$

Table 1: List of materials

| Material | Function | Description |
|---|---|---|
| Epikote 828 | Epoxy resin | Trade designation of a liquid reaction product of epichlorohydrin and bisphenol A having an approximate epoxy equivalent weight of 184 - 190 grams/equivalent. Commercially available by Momentive. |
| Epon 828 | Epoxy resin | Trade designation of a solid reaction product of epichlorohydrin and bisphenol A having an approximate epoxy equivalent weight of 185-192 grams/equivalent according to ASTM D 1652. Commercially available by Resolution Performance Products. |
| D.E.R 671 | Epoxy resin | Trade designation of a solid reaction product of epichlorohydrin and bisphenol A having an approximate epoxy equivalent weight of 475-550 grams/equivalent according to ASTM D 1652. Commercially available by Dow Chemical Co. |
| Epilox A50-02 | Epoxy resin | Trade designation of a solid reaction product of epichlorohydrin and bisphenol A having an approximate epoxy equivalent weight of 450-500 grams/equivalent according to ASTM D 1652. Commercially available by Leuna Harze. |
| PK-HP 200 | Thermoplastic resin | Trade designation of a phenoxy resin. Commercially available by InChem Corporation. |

(continued)

| Material | Function | Description |
|---|---|---|
| PK-HH | Thermoplastic resin | Trade designation of a phenoxy resin. Commercially available by InChem Corporation. |
| Epodil 757 | Flexibilizing and wetting agent | Trade designation of a glycidyl ether of cyclohexane dimethanol. Commercially available by Air Products and Chemicals, Inc. |
| Paraloid 2650A | Thoughening agent | Trade designation of a core-shell toughening agent based on butadiene rubber. Commercially available by Rohm and Hass. |
| Amicure CG1200 | Primary Curative | Trade designation of 2-cyanoguanidine (dicyandiamide), available from Air Products. |
| Omicure U52M | Curative accelerator | Trade designation of 4,4 methylene bisphenyl dimethyl urea, available from CVC Speciality Chemicals, USA. |
| Micropearl F48D | Physical blowing agent | Trade designation of a thermoexpandable microcapsule produced by encapsulating volatile hydrocarbon with acrylic copolymer. Commercially available by Pierce & Stevens Chemical Corp. |
| MinSil 20 | Fused Silica | Trade designation of fused silica commercially available by Minco,Inc., USA |
| Aerosil R202 | Silica filler /hydrophobizing agent | Trade designation of a fumed silica aftertreated with a polydimethysiloxane, available commercially by Degussa AG, Germany. |
| Eurocell 140 | Particulate filler | Trade designation of expanded perlite, commercially available by Europerl, Germany. |
| Glasperlen | Particulate spacer | Trade designation of glass beads (average grain size 90$\mu$m), commercially available by Kominex Mineralmahlwerk, GmbH. |

## Examples

*Preparation of examples 1 - 2 and comparative example C-1*

The epoxy-based compositions of the present invention are prepared by combining the ingredients from the list of materials of table 1 in a high speed mixer (DAC 150 FVZ Speedmixer, from Hauschild Engineering) stirring at 3000 rpm. In Table 2, all concentrations are given as wt.%. Comparative example C-1 does not comprise any thermoplastic resin.

In a first step the epoxy resin, the thermoplastic phenoxy resin and the core shell toughening agent are mixed together for 2 min. The mixture is then placed into an air-driven oven at temperature of 95 °C for about 1 h. The hot mixture is again stirred for 2 min at 3000 rpm in the speed mixer to ensure complete dispersion of the three ingredients. Then the mixer temperature is reduced to 60°C and the two curatives (Amnicure CG1200 and Omicure U52M) together with the physical blowing agent, and optionally the filler material and/or the glass beads, are added to the mixture, followed by mixing for an additional 2 minutes under vacuum. The resulted mixture is a paste having a uniform consistency. By using a knife coater the mixer is hot coated to a film having thickness of 0.4 mm. The formed film is soft and homogenous when cooled down.

Table 2:

| Raw material | Weight % | | | |
|---|---|---|---|---|
| | **Example 1** | **Example 2** | **Example C-1** | **Example C-2** |
| Epikote 828 | 54.5 | 0 | 27.1 | 0 |
| Epon 828 | 0 | 54.4 | 0 | 0 |
| D.E.R 671 | 0 | 36.1 | 36.1 | 0 |
| Epilox A50-02 | 0 | 0 | 0 | 54.5 |
| PK-HP 200 | 26.0 | 0 | 0 | 26 |

(continued)

| Raw material | Weight % | | | |
|---|---|---|---|---|
| | Example 1 | Example 2 | Example C-1 | Example C-2 |
| PK-HH | 0 | 26.0 | 0 | 0 |
| Epodil 757 | 0 | 4.5 | 4.5 | 0 |
| Paraloid 2650A | 13.5 | 13.5 | 22.6 | 13.5 |
| Amicure CG1200 | 3.3 | 3.2 | 2.8 | 3.3 |
| Omicure U52M | 1.5 | 1.5 | 1.1 | 1.5 |
| MinSil 20 | 0 | | 0 | 0 |
| Aerosil R202 | 0 | 5.00 | 4.5 | 0 |
| Eurocell 140 | 0 | 3.0 | 0 | 0 |
| Micropearl F48D | 1.3 | 0.50 | 1.1 | 1.3 |
| Glasperlen 90 $\mu$m | 0 | 1.0 | 0 | 0 |

Table 3: Results of the Tensile Test according to DIN 53 455 (Elongation at break).

| | Example C-1 | | Example 2 | |
|---|---|---|---|---|
| | F max (N) | e- break (mm) | F max (N) | e- break (mm) |
| Specimen 1 | 26,7 | 16,8 | 1,4 | 482,8 |
| Specimen 2 | 24,7 | 17,1 | 1,3 | 468,1 |
| Specimen 3 | 24,5 | 17,7 | 1,0 | 502,6 |
| Specimen 4 | 27,1 | 17,3 | 1,0 | 478,1 |
| | | | | |
| Average | 25,8 | 17,2 | 1,2 | 482,9 |
| Standard deviation | 1,3 | 0,4 | 0,2 | 14,5 |
| Elongation in % : 100* $\Delta$L / L | / | (100*17/50) = 34% | / | (100*480/50) =960% |

As can be seen from the results shown in Table 3, the structural adhesive film according to the present invention, is provided with an elongation at break which is much higher than that of an adhesive film not according to the invention. Comparative adhesive film C-2 is obtained as a very brittle material and is unsuitable for the Tensile Test as described above.

Table 4:

| Test Method | Example 1 |
|---|---|
| Overlap Shear Strength at RT (Mpa) | 21 |
| Overlap Shear Strength at 80°C (MPa) | 16 |
| Overlap Shear Strength at -40°C (MPa) | 21 |
| Peel Strength at RT (N/25mm) | 150 |
| Wash-Out Resistance | Pass |

**Claims**

1.   A structural adhesive film comprising a thermosettable composition, which comprises:

a) from 40 to 60 wt% of an epoxy compound having an average epoxy equivalent weight of less than 250 g/equivalent;
b) from 10 to 50 wt% of a thermoplastic resin having a softening point comprised between 60°C and 140°C;
c) from 2 to 15 wt% of an epoxy curing agent; and
d) optionally, a toughening agent;

wherein the weight ratio of said epoxy compound and said thermoplastic resin, and optionally the amount of said toughening agent are selected such as to provide said structural adhesive film with an elongation at break of at least 60% when measured according to tensile test DIN EN ISO 527; and
wherein the weight ratio of said epoxy compound and said thermoplastic resin is comprised between 0.8 and 4.

2. A structural adhesive film according to claim 1, wherein the thermosettable composition comprises:

a) from 50 to 60 wt%, of an epoxy compound having an average epoxy equivalent weight of less than 250 g/equivalent, preferably less than 230 g/equivalent, more preferably less than 220 g/equivalent, even more preferably less than 200 g/equivalent ;
b) from 15 to 30 wt%, preferably from 20 to 30 wt%, of a thermoplastic resin having a softening point comprised between 60°C and 140°C;
c) from 2 to 8 wt%, preferably from 2.5 to 4 wt%, of an epoxy curing agent;
d) optionally, a toughening agent; and

wherein the weight ratio of said epoxy compound and said thermoplastic resin is comprised between 1 and 3, more preferably between 1.5 and 2.5.

3. A structural adhesive film according to any of claim 1 or 2, wherein the epoxy compound has a weight average molecular weight of less than 700 g/mol, preferably less than 500 g/mol, more preferably less than 400 g/mol.

4. A structural adhesive film according to any of the preceding claims, wherein the thermoplastic resin has a softening point comprised between 70°C and 120°C, preferably between 80°C and 100°C, more preferably between 85°C and 95°C.

5. A structural adhesive film according to any of the preceding claims, wherein the thermoplastic resin is selected from the group of polyhydroxyether thermoplastic resins, which are preferably selected from the group consisting of phenoxy resins, polyether diamine resins, polyvinylacetal resins, in particular polyvinyl butyral resins, and any combinations or mixtures thereof.

6. A structural adhesive film according to any of the preceding claims, wherein the thermosettable composition comprises a toughening agent preferably selected from the group consisting of core-shell tougheners, in an amount preferably comprised between 10 and 40 wt%, more preferably between 10 and 30 wt%, even more preferably between 10 and 20 wt%.

7. A structural adhesive film according to any of the preceding claims, wherein the thermosettable composition further comprises a blowing agent, preferably selected from the group consisting of non-encapsulated and encapsulated blowing agents, in an amount preferably comprised between 0.5 and 10 wt%, more preferably between 1 and 5 wt%, even more preferably between 1 and 2 wt%.

8. A structural adhesive film according to any of the preceding claims, wherein the weight ratio of said epoxy compound and said thermoplastic resin, and optionally the amount of said toughening agent are selected such as to provide said structural adhesive film with an elongation at break of at least 100%, preferably at least 200%, more preferably at least 500%, even more preferably at least 700%, still more preferably at least 900%, when measured according to tensile test DIN EN ISO 527.

9. A structural adhesive film according to any of claim 7 or 8, wherein the amount of the blowing agent is selected such as to provide the structural adhesive film with a free expansion rate upon curing of between 10 and 40%, preferably between 10 and 30%, more preferably between 15 and 25%, when subjecting the structural adhesive film to a curing temperature above the activation temperature of the curing reaction, and when said free expansion rate is measured as described in the Test Methods section.

**10.** A method for bonding metal parts, the method comprising :

a) providing a first metal part and a second metal part, wherein one of the first metal part and the second metal part comprises a metal panel;

b) providing a structural adhesive film according to any of claims 1 to 9;

c) adhering said first metal part and second metal part at a temperature below the activation temperature of the epoxy curing agent, thereby forming a metal joint; and

d) heating the metal joint at a temperature above the activation temperature of the epoxy curing agent, so as to cause thermosetting of the thermosettable composition of the structural adhesive film.

**11.** A method according to claim 10 for hem flange bonding of metal parts, wherein:

- the structural adhesive film has a first portion near a first end of said structural adhesive film and a second portion near the second end opposite to the first end of said structural adhesive film;

- the first metal part comprises a first metal panel having a first body portion and a first flange portion along a margin of said first body portion adjacent a first end of said first body portion;

- the second metal part comprises a second metal panel having a second body portion and a second flange portion along a margin of said second body portion adjacent a second end of said second body portion;

wherein the method comprises the steps of:

a) adhering the structural adhesive film to said first metal panel or second metal panel at a temperature below the activation temperature of the epoxy curing agent, whereby following adhering and folding, a metal joint is obtained wherein the structural adhesive film is folded such that:

i. the first portion of the structural adhesive film is provided between the second flange of the second metal panel and the first body portion of the first metal panel, and

ii. the second portion of the structural adhesive film is provided between the first flange of the first metal panel and the second body portion of the second metal panel; and

b) heating the metal joint at a temperature above the activation temperature of the epoxy curing agent, so as to cause thermosetting of the thermosettable composition of the structural adhesive film.

**12.** A method according to claim 11, wherein the structural adhesive film is adhered to the second metal panel with the structural adhesive film being adhered to the second flange of the second metal panel and folded around the second end of the second metal panel such that the structural adhesive film is adhered to opposite sides of the second flange of the second metal panel.

**13.** A metal part assembly, comprising:

a) a first metal part and a second metal part, wherein at least one of the first metal part and second metal part comprises a metal panel; and

b) a thermoset structural adhesive film having a first portion near a first end of said structural adhesive film and a second portion near the second end opposite to the first end of said structural adhesive film;

whereby the thermoset structural adhesive film is provided between the first metal part and the second metal part and adheres the first metal part and the second metal part together, and wherein the thermoset structural adhesive film is obtainable by thermosetting of the thermosettable composition as defined in any of the claims 1 to 9.

**14.** A thermoset structural adhesive film obtainable by thermosetting of the thermosettable composition as defined in any of claims 1 to 9, wherein the thermosetting of the thermosettable composition is performed at a temperature comprised between 140°C and 200°C.

**15.** Use of a structural adhesive film according to any of claims 1 to 9 for bonding metal parts, preferably for hem flange bonding of metal parts.

**Patentansprüche**

1. Dünne Strukturklebstoffschicht, die eine warm aushärtbare Zusammensetzung umfasst, die Folgendes umfasst:

   a) von 40 bis 60 Gew.-% einer Epoxidverbindung, die ein mittleres Epoxid-Äquivalentgewicht von weniger als 250 g/Äquivalent aufweist;
   b) von 10 bis 50 Gew.-% eines Thermoplasts, der einen Erweichungspunkt aufweist, der zwischen 60 °C und 140 °C enthalten ist;
   c) von 2 bis 15 Gew.-% eines Epoxidhärtungsmittels; und
   d) wahlweise einen Elastifikator;

   wobei das Gewichtsverhältnis der Epoxidverbindung und des Thermoplasts und wahlweise die Menge des Elastifikators derart ausgewählt sind, dass die dünne Strukturklebstoffschicht mit einer Bruchdehnung von mindestens 60%, gemessen gemäß Zugversuch nach DIN EN ISO 527, versehen ist; und
   wobei das Gewichtsverhältnis der Epoxidverbindung und des Thermoplasts zwischen 0.8 und 4 enthalten ist.

2. Dünne Strukturklebstoffschicht nach Anspruch 1, wobei die warm aushärtbare Zusammensetzung Folgendes umfasst:

   a) von 50 bis 60 Gew.-% einer Epoxidverbindung, die ein mittleres Epoxid-Äquivalentgewicht von weniger als 250 g/Äquivalent, vorzugsweise weniger als 230 g/Äquivalent, noch mehr bevorzut weniger als 220 g/Äquivalent, sogar noch mehr bevorzugt 200 g/Äquivalent aufweist;
   b) von 15 bis 30 Gew.-%, vorzugsweise von 20 bis 30 Gew.-%, eines Thermoplasts, der einen Erweichungspunkt aufweist, der zwischen 60 °C und 140 °C enthalten ist;
   c) von 2 bis 8 Gew.-%, vorzugsweise von 2,5 bis 4 Gew.-%, eines Epoxid-Härtungsmittels;
   d) wahlweise einen Elastifikator; und

   wobei das Gewichtsverhältnis der Epoxidverbindung und des Thermoplasts zwischen 1 und 3, noch mehr bevorzugt zwischen 1,5 und 2,5 enthalten ist.

3. Dünne Strukturklebstoffschicht nach einem der Ansprüche 1 oder 2, wobei die Epoxidverbindung ein Gewichtsmittel des Molekulargewichts von weniger als 700 g/mol, vorzugsweise weniger als 500 g/mol, noch mehr bevorzugt weniger als 400 g/mol aufweist.

4. Dünne Strukturklebstoffschicht nach einem der vorstehenden Ansprüche, wobei der Thermoplast einen Erweichungspunkt aufweist, der zwischen 70 °C und 120 °C, vorzugsweise zwischen 80 °C und 100 °C, noch mehr bevorzugt zwischen 85 °C und 95 °C enthalten ist.

5. Dünne Strukturklebstoffschicht nach einem der vorstehenden Ansprüche, wobei der Thermoplast von der Gruppe der Polyhydroxyether-Thermoplaste ausgewählt ist, die vorzugsweise aus der Gruppe ausgewählt sind, die aus Phenoxyharzen, Polyether-Diamin-Harzen, Polyvinylacetalharzen, insbesondere Polyvinylbutyralharzen und irgendwelchen Kombinationen oder Mischungen davon besteht.

6. Dünne Strukturklebstoffschicht nach einem der vorstehenden Ansprüche, wobei die warm aushärtbare Zusammensetzung einen Elastifikator umfasst, der vorzugsweise von der Gruppe ausgewählt ist, die aus Kern-Schale-Elastifikatoren in einer Menge besteht, die vorzugsweise zwischen 10 und 40 Gew.-%, mehr bevorzugt zwischen 10 und 30 Gew.-%, sogar noch mehr bevorzugt zwischen 10 und 20 Gew.-% enthalten ist.

7. Dünne Strukturklebstoffschicht nach einem der vorstehenden Ansprüche, wobei die warm aushärtbare Zusammensetzung ferner ein Treibmittel umfasst, das vorzugsweise von der Gruppe ausgewählt ist, die aus nicht verkapselten und verkapselten Treibmitteln in einer Menge besteht, die vorzugsweise zwischen 0,5 und 10 Gew.-%, mehr bevorzugt zwischen 1 und 5 Gew.-%, sogar noch mehr bevorzugt zwischen 1 und 2 Gew.-% enthalten ist.

8. Dünne Strukturklebstoffschicht nach einem der vorstehenden Ansprüche, wobei das Gewichtsverhältnis der Epoxidverbindung und des Thermoplasts und wahlweise die Menge des Elastifikators derart ausgewählt sind, dass die dünne Strukturklebstoffschicht mit einer Bruchdehnung von mindestens 100 %, vorzugsweise mindestens 200 %, mehr bevorzugt mindestens 500 %, noch mehr bevorzugt mindestens 700 %, sogar noch mehr bevorzugt mindestens 900 %, gemessen gemäß Zugversuch nach DIN EN ISO 527, versehen ist.

9. Dünne Strukturklebstoffschicht nach einem der Ansprüche 7 oder 8, wobei die Menge des Treibmittels derart ausgewählt ist, dass die dünne Strukturklebstoffschicht mit einer freien Ausdehnungsrate beim Härten zwischen 10 und 40 %, vorzugsweise zwischen 10 und 30 %, mehr bevorzugt zwischen 15 und 25 % versehen ist, wenn die dünne Strukturklebstoffschicht einer Härtungstemperatur über der Aktivierungstemperatur der Härtungsreaktion ausgesetzt wird und wenn die freie Ausdehnungsrate gemessen wird, wie im Abschnitt Versuchsverfahren beschrieben.

10. Verfahren zur Verbindung von Metallteilen, wobei das Verfahren Folgendes umfasst:

   a) Bereitstellen eines ersten Metallteils und eines zweiten Metallteils, wobei eines von dem ersten Metallteil und dem zweiten Metallteil eine Metallplatte umfasst;
   b) Bereitstellen einer dünnen Strukturklebstoffschicht nach einem der Ansprüche 1 bis 9;
   c) Kleben des ersten Metallteils und des zweiten Metallteils bei einer Temperatur unter der Aktivierungstemperatur des Epoxid-Härtungsmittels, wodurch eine Metallnahtstelle gebildet wird; und
   d) Erhitzen der Metallnahtstelle auf eine Temperatur über der Aktivierungstemperatur des Epoxid-Härtungsmittels, um die Warmaushärtung der warm aushärtbaren Zusammensetzung der dünnen Strukturklebstoffschicht zu bewirken.

11. Verfahren nach Anspruch 10 zur Bördelnahtverbindung von Metallteilen, wobei:

   - die dünne Strukturklebstoffschicht einen ersten Abschnitt in der Nähe eines ersten Endes der dünnen Strukturklebstoffschicht und einen zweiten Abschnitt in der Nähe des zweiten Endes aufweist, das dem ersten Ende der dünnen Strukturklebstoffschicht entgegengesetzt ist;
   - das erste Metallteil eine erste Metallplatte umfasst, die einen ersten Körperabschnitt und einen ersten Bördelabschnitt entlang eines Randes des ersten Körperabschnitts einem ersten Ende des ersten Körperabschnitts benachbart aufweist;
   - das zweite Metallteil eine zweite Metallplatte umfasst, die einen zweiten Körperabschnitt und einen zweiten Bördelabschnitt entlang eines Randes des zweiten Körperabschnitts einem zweiten Ende des zweiten Körperabschnitts benachbart aufweist;

   wobei das Verfahren die folgenden Schritte umfasst:

   a) Kleben der dünnen Strukturklebstoffschicht an die erste Metallplatte oder die zweite Metallplatte bei einer Temperatur unter der Aktivierungstemperatur des Epoxid-Härtungsmittels, wobei nach dem Kleben und Falten eine Metallnahtstelle erhalten wird, wobei die dünne Strukturklebstoffschicht derart gefaltet wird, dass:

      i. der erste Abschnitt der dünnen Strukturklebstoffschicht zwischen dem zweiten Bördel der zweiten Metallplatte und dem ersten Körperabschnitt der ersten Metallplatte bereitgestellt wird; und
      ii. der zweite Abschnitt der dünnen Strukturklebstoffschicht zwischen dem ersten Bördel der ersten Metallplatte und dem zweiten Körperabschnitt der zweiten Metallplatte bereitgestellt wird; und

   b) Erhitzen der Metallnahtstelle auf eine Temperatur über der Aktivierungstemperatur des Epoxid-Härtungsmittels, um die Warmaushärtung der warm aushärtbaren Zusammensetzung der dünnen Strukturklebstoffschicht zu bewirken.

12. Verfahren nach Anspruch 11, wobei die dünne Strukturklebstoffschicht an die zweite Metallplatte geklebt wird, während die dünne Strukturklebstoffschicht an den zweiten Bördel der zweiten Metallplatte geklebt wird und um das zweite Ende der zweiten Metallplatte gefaltet wird, derart, dass die dünne Strukturklebstoffschicht an entgegengesetzten Seiten des zweiten Bördels der zweiten Metallplatte geklebt wird.

13. Metallteil-Baugruppe, die Folgendes umfasst:

   a) ein erstes Metallteil und ein zweites Metallteil, wobei mindestens eines von dem ersten Metallteil und dem zweiten Metallteil eine Metallplatte umfasst; und
   b) eine warm ausgehärtete dünne Strukturklebstoffschicht, die einen ersten Abschnitt in der Nähe eines ersten Endes der dünnen Strukturklebstoffschicht und einen zweiten Abschnitt in der Nähe des zweiten Endes aufweist, das dem ersten Ende der dünnen Strukturklebstoffschicht entgegengesetzt ist;

wobei die warm ausgehärtete dünne Strukturklebstoffschicht zwischen dem ersten Metallteil und dem zweiten Metallteil bereitgestellt ist und das erste Metallteil und das zweite Metallteil zusammenklebt und wobei die warm ausgehärtete dünne Strukturklebstoffschicht durch Warmaushärtung der warm aushärtbaren Zusammensetzung nach einem der Ansprüche 1 bis 9 erhalten werden kann.

14. Warm ausgehärtete dünne Strukturklebstoffschicht, die durch Warmaushärten der warm aushärtbaren Zusammensetzung nach einem der Ansprüche 1 bis 9 erhalten werden kann, wobei das Warmaushärten der warm aushärtbaren Zusammensetzung bei einer Temperatur durchgeführt wird, die zwischen 140 °C und 200 °C enthalten ist.

15. Verwendung einer dünnen Strukturklebstoffschicht nach einem der Ansprüche 1 bis 9 zum Verbinden von Metallteilen, vorzugsweise zur Bördelnahtverbindung von Metallteilen.

**Revendications**

1. Film adhésif structural comprenant une composition thermodurcissable, qui comprend :

   a) de 40 à 60 % en poids d'un composé époxy possédant un poids moyen d'équivalent époxy inférieur à 250 g/équivalent ;
   b) de 10 à 50 % en poids d'une résine thermoplastique possédant un point de ramollissement compris entre 60 °C et 140 °C ;
   c) de 2 à 15 % en poids d'un agent de durcissement d'époxy ; et
   d) facultativement, un agent de ténacité ;

   dans lequel le rapport pondéral dudit composé époxy et de ladite résine thermoplastique, et facultativement la quantité dudit agent de ténacité sont choisis de façon à fournir audit film adhésif structural un allongement à la rupture d'au moins 60 % lorsqu'on mesure selon l'essai de traction DIN EN ISO 527 ; et
   dans lequel le rapport pondéral dudit composé époxy et de ladite résine thermoplastique est compris entre 0,8 et 4.

2. Film adhésif structural selon la revendication 1, dans lequel la composition thermodurcissable comprend :

   a) de 50 à 60 % en poids, d'un composé époxy possédant un poids moyen d'équivalent époxy inférieur à 250 g/équivalent, de préférence, inférieur à 230 g/équivalent, plus préférablement, inférieur à 220 g/équivalent, encore plus préférablement, inférieur à 200 g/équivalent ;
   b) de 15 à 30 % en poids, de préférence de 20 à 30 % en poids, d'une résine thermoplastique possédant un point de ramollissement compris entre 60 °C et 140 °C ;
   c) de 2 à 8 % en poids, de préférence de 2,5 à 4 % en poids, d'un agent de durcissement d'époxy ;
   d) facultativement, un agent de ténacité ; et

   dans lequel le rapport pondéral dudit composé époxy et de ladite résine thermoplastique est compris entre 1 et 3, plus préférablement entre 1,5 et 2,5.

3. Film adhésif structural selon l'une quelconque des revendications 1 ou 2, dans lequel le composé époxy a une masse moléculaire moyenne en poids inférieure à 700 g/mol, de préférence moins de 500 g/mol, plus préférablement moins de 400 g/mol.

4. Film adhésif structural selon l'une quelconque des revendications précédentes, dans lequel la résine thermoplastique a un point de ramollissement compris entre 70 °C et 120 °C, de préférence entre 80 °C et 100 °C, plus préférablement entre 85 °C et 95 °C.

5. Film adhésif structural selon l'une quelconque des revendications précédentes, dans lequel la résine thermoplastique est choisie dans le groupe de résines thermoplastiques polyhydroxyéther, qui sont choisies de préférence dans le groupe constitué de résines phénoxy, résines polyéther diamine, résines polyvinylacétal, en particulier des résines polyvinyl butyral, et n'importe quels combinaisons ou mélanges de celles-ci.

6. Film adhésif structural selon l'une quelconque des revendications précédentes, dans lequel la composition thermodurcissable comprend un agent de ténacité choisi de préférence dans le groupe constitué d'agents de ténacité à noyau-coque, en une quantité comprise de préférence entre 10 et 40 % en poids, plus préférablement entre 10 et 30 % en poids, encore plus préférablement entre 10 et 20 % en poids.

7.  Film adhésif structural selon l'une quelconque des revendications précédentes, dans lequel la composition thermodurcissable comprend en outre un agent d'expansion, choisi de préférence dans le groupe constitué d'agents d'expansion non encapsulés et encapsulés, en une quantité comprise de préférence entre 0,5 et 10 % en poids, plus préférablement entre 1 et 5 % en poids, encore plus préférablement entre 1 et 2 % en poids.

8.  Film adhésif structural selon l'une quelconque des revendications précédentes, dans lequel le rapport pondéral dudit composé époxy et de ladite résine thermoplastique, et facultativement la quantité dudit agent de ténacité sont choisis de façon à fournir audit film adhésif structural un allongement à la rupture d'au moins 100 %, de préférence au moins 200 %, plus préférablement au moins 500 %, encore plus préférablement au moins 700 %, encore plus préférablement au moins 900 %, lorsqu'on mesure selon l'essai de traction DIN EN ISO 527.

9.  Film adhésif structural selon l'une quelconque des revendications 7 ou 8, dans lequel la quantité de l'agent d'expansion est choisie de façon à fournir au film adhésif structural un taux d'expansion libre au durcissement compris entre 10 et 40 %, de préférence entre 10 et 30 %, plus préférablement entre 15 et 25 %, lorsqu'on soumet le film adhésif structural à une température de durcissement supérieure à la température d'activation de la réaction de durcissement, et lorsque ledit taux d'expansion libre est mesuré de la façon décrite dans la section Procédés de test.

10. Procédé de liaison de pièces en métal, le procédé comprenant :

    a) la fourniture d'une première pièce en métal et d'une deuxième pièce en métal, dans lequel une pièce parmi la première pièce en métal et la deuxième pièce en métal comprend un panneau métallique ;
    b) la fourniture d'un film adhésif structural selon l'une quelconque des revendications 1 à 9 ;
    c) l'adhésion de ladite première pièce en métal et de la deuxième pièce en métal à une température inférieure à la température d'activation de l'agent de durcissement d'époxy, ce qui forme un joint de métal ; et
    d) le chauffage du joint de métal à une température supérieure à la température d'activation de l'agent de durcissement d'époxy, afin d'entraîner le thermodurcissement de la composition thermodurcissable du film adhésif structural.

11. Procédé selon la revendication 10, pour la liaison à bord rabattu de pièces en métal, dans lequel :

    - le film adhésif structural a une première partie près d'une première extrémité dudit film adhésif structural et une deuxième partie près de la deuxième extrémité opposée à la première extrémité dudit film adhésif structural ;
    - la première pièce en métal comprend un premier panneau métallique possédant une première partie de corps et une première partie de rebord le long d'un bord de ladite première partie de corps adjacent à une première extrémité de ladite première partie de corps ;
    - la deuxième pièce en métal comprend un deuxième panneau métallique possédant une deuxième partie de corps et une deuxième partie de rebord le long d'un bord de ladite deuxième partie de corps adjacent à une deuxième extrémité de ladite deuxième partie de corps ;

    où le procédé comprend les étapes consistant à :

    a) faire adhérer le film adhésif structural audit premier panneau métallique ou audit deuxième panneau métallique à une température inférieure à la température d'activation de l'agent de durcissement d'époxy, moyennant quoi après adhésion et pliage, un joint de métal est obtenu, dans lequel le film adhésif structural est plié de telle sorte que :

        i. la première partie du film adhésif structural est fournie entre le deuxième rebord du deuxième panneau métallique et la première partie de corps du premier panneau métallique, et
        ii. la deuxième partie du film adhésif structural est fournie entre le premier rebord du deuxième panneau métallique et la deuxième partie de corps du premier panneau métallique ; et

    b) le chauffage du joint de métal à une température supérieure à la température d'activation de l'agent de durcissement d'époxy, afin d'entraîner le thermodurcissement de la composition thermodurcissable du film adhésif structural.

12. Procédé selon la revendication 11, dans lequel le film adhésif structural est mis en adhésion au deuxième panneau métallique avec le film adhésif structural étant mis en adhésion au deuxième rebord du deuxième panneau métallique et plié autour de la deuxième extrémité du deuxième panneau métallique de telle sorte que le film adhésif structural est mis en adhésion aux côtés opposés du deuxième rebord du deuxième panneau métallique.

13. Ensemble de pièces en métal, comprenant :

a) une première pièce en métal et une deuxième pièce en métal, dans lequel au moins l'une parmi la première pièce en métal et la deuxième pièce en métal comprend un panneau métallique ; et
b) un film adhésif structural thermodurcissable possédant a une première partie près d'une première extrémité dudit film adhésif structural et une deuxième partie près de la deuxième extrémité opposée à la première extrémité dudit film adhésif structural ;

moyennant quoi le film adhésif structural thermodurcissable est fourni entre la première pièce en métal et la deuxième pièce en métal et fait adhérer la première pièce en métal et la deuxième pièce en métal l'une à l'autre, et dans lequel le film adhésif structural thermodurcissable peut être obtenu par thermodurcissement de la composition thermodurcissable telle que définie dans l'une quelconque des revendications 1 à 9.

14. Film adhésif structural thermodurcissable pouvant être obtenu par thermodurcissement de la composition thermodurcissable telle que définie dans l'une quelconque des revendications 1 à 9, dans lequel le thermodurcissement de la composition thermodurcissable est effectué à une température comprise entre 140 °C et 200 °C.

15. Utilisation d'un film adhésif structural selon l'une quelconque des revendications 1 à 9, pour la liaison de pièces en métal, de préférence pour la liaison à bord rabattu de pièces en métal.

FIG. 1

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6000118 A
- US 6368008 B
- WO 2009071269 A
- US 6528176 B
- WO 2007014039 A
- WO 2011141148 A
- US 5019605 A